Europäisches Patentamt

European Patent Office

Office européen des brevets

(19)

(11) Veröffentlichungsnummer: **0 155 641**
**B1**

# (12) EUROPÄISCHE PATENTSCHRIFT

(45) Veröffentlichungstag der Patentschrift:
**18.10.89**

(51) Int. Cl.⁴: **B 60 R 13/06**

(21) Anmeldenummer: **85102949.6**

(22) Anmeldetag: **14.03.85**

(54) Vorrichtung zur Führung und Halterung einer beweglichen Fensterscheibe im Fensterrahmen eines Kraftfahrzeugs.

(30) Priorität: **20.03.84 DE 3410192**

(43) Veröffentlichungstag der Anmeldung:
**25.09.85 Patentblatt 85/39**

(45) Bekanntmachung des Hinweises auf die Patenterteilung:
**18.10.89 Patentblatt 89/42**

(84) Benannte Vertragsstaaten:
**DE FR GB IT SE**

(56) Entgegenhaltungen:
**DE-A- 1 659 672**
**DE-A- 2 151 144**
**FR-A- 2 381 890**
**FR-A- 2 477 662**
**FR-A- 2 521 497**
**FR-A- 2 550 843**
**US-A- 2 169 503**

(73) Patentinhaber: **METZELER Gesellschaft mit beschränkter Haftung, Gneisenaustrasse 15, D-8000 München 50 (DE)**

(72) Erfinder: **Brocke, Rolf, Engetsweiler Strasse 37, D-7988 Neuravensburg (DE)**

(74) Vertreter: **Michelis, Theodor, Dipl.-Ing., Gneisenaustrasse 15, D-8000 München 50 (DE)**

# Beschreibung

Die Erfindung betrifft eine Vorrichtung zur Führung und Halterung einer beweglichen Fensterscheibe im Fensterrahmen eines Kraftfahrzeugs der im Oberbegriff des Anspruchs 1 angegebenen Gattung.

Solche Vorrichtungen werden insbesondere für die Führung und Halterung der Scheiben der Seitenfenster von Kraftfahrzeugen eingesetzt, wobei die eigentliche Führung und Halterung durch den direkten Kontakt zwischen den Profilen aus elastomerem Material, insbesondere Gummiprofilen, einerseits und dem Randbereich der Fensterscheibe andererseits erfolgt, wodurch die einwandfreie Führung der Fensterscheibe ohne jede Gefahr einer Beschädigung ihrer empfindlichen Oberfläche gewährleistet ist. Trotz vieler Entwicklungen auf diesem Gebiet bereitet jedoch nach wie vor die Verbindung einer solchen Vorrichtung mit dem entsprechenden Karosserieteil des Kraftfahrzeugs, also im allgemeinen den Blechkanten des Fensterrahmens, Probleme; eine solche Verbindung kann beispielsweise durch Aufkleben des entsprechenden Gummiprofils auf das zugehörige Karosserieteil erfolgen; eine solche Montage ist jedoch mühsam und umständlich.

Weiterhin ist es bekannt, sogenannte «Verbund-Profile» zu verwenden, also Profile mit einem weichen Dichtungsteil und mit einem Klemmteil aus lederhartem Gummi; diese Verbundprofile sind jedoch in der Herstellung sehr aufwendig und kompliziert und dementsprechend kostspielig. Dabei spielt auch eine Rolle, daß sie mit engen Toleranzen gefertigt werden müssen, das sie im exakten Formschluß auf die entsprechenden Karosserieteile aufgebracht werden.

Und schließlich können übliche Gummiprofile mit Stahleinlagen versehen werden, die die erforderlichen Klemmkräfte erzeugen. Hierbei besteht jedoch die Gefahr, daß aufgrund der Reibung zwischen dem Gummi und dem Karosserieteil die Gummischicht abgetragen wird und es zu einem direkten Kontakt Blechkante/Stahleinlage kommt. Diese Berührungsstelle ist naturgemäß besonders empfindlich gegen Rostanfall.

Ein weiteres Problem liegt bei solchen Vorrichtungen schließlich darin, daß im allgemeinen neben dem eigentlichen Profil für die Führung und Halterung der Fensterscheibe noch sogenannte «Schachtabdichtungen» verwendet werden müssen, also getrennte, zusätzliche Profile aus elastomerem Material, die ebenfalls an der Fensterscheibe anliegen und den Fensterschacht der Tür des Kraftfahrzeugs abdichten. Hierfür sind im allgemeinen andere, zusätzliche Porfiltypen erforderlich.

Der Erfindung liegt deshalb die Aufgabe zugrunde, eine Vorrichtung zur Führung und Halterung einer beweglichen Fensterscheibe im Fensterrahmen eines Kraftfahrzeugs der angegebenen Gattung zu schaffen, bei der die oben erwähnten Nachteile nicht auftreten.

Insbesondere soll eine Vorrichtung vorgeschlagen werden, die nicht nur zur sicheren Führung und Halterung der Fensterscheibe, sondern gleichzeitig auch als Schachtabdichtung dient.

Dies wird erfindungsgemäß durch die im kennzeichnenden Teil des Anspruchs 1 angegebenen Merkmale erreicht. Zweckmäßige Ausführungsformen sind in den Unteransprüchen zusammengestellt.

Die mit der Erfindung erzielten Vorteile beruhen auf der Verwendung einer Profilkombination für die Fensterführung und die Abdichtung des Fensterschachtes, die einfach in den entsprechenden Fensterrahmen der Tür eines Kraftfahrzeugs eingeknöpft wird. Diese verschiedenen Profile lassen sich sehr leicht fertigen, handhaben und montieren. Trotzdem ist ein fester Sitz der Profile im Einknöpfbereich gewährleistet. Im Vergleich mit den üblichen Ausführungsformen können diese Profile mit kleinem Profilquerschnitt ausgelegt werden, so daß sie nur wenig Platz beanspruchen. Trotzdem ist eine sichere Führung und Abdichtung der Fensterscheibe gewährleistet.

Die Fertigung bereitet keine Probleme, da die beiden Teilprofile symmetrisch sind, also aus den gleichen Rohprofilen hergestellt werden können, die auf die erforderliche Länge zerschnitten und dann an den Enden miteinander verbunden werden.

Es ist keine zusätzliche Leiste zur Abdichtung des Fensterschachtes erforderlich, da diese Funktion von den Teilprofilen mit übernommen wird, die, wie erwähnt, die Fensterscheibe längs ihres gesamten Randes einschließen.

Und schließlich ist ein gleichmäßiger Sitz der Fensterscheibe und der Profile im Fensterrahmen gewährleistet.

Die Erfindung wird im folgenden anhand von Ausführungsbeispielen unter Bezugnahme auf die beiliegenden, schematischen Zeichnungen näher erläutert. Es zeigen

Fig. 1 eine Seitenansicht der Tür eines Kraftfahrzeugs,

Fig. 2 einen Schnitt durch alle Teile der Vorrichtung zur Führung und Halterung der Fensterscheibe im Fensterrahmen des Kraftfahrzeugs, und

Fig. 3 eine Detailansicht einer modifizierten Ausführungsform einer Vorrichtung zur Führung und Halterung der Fensterscheibe.

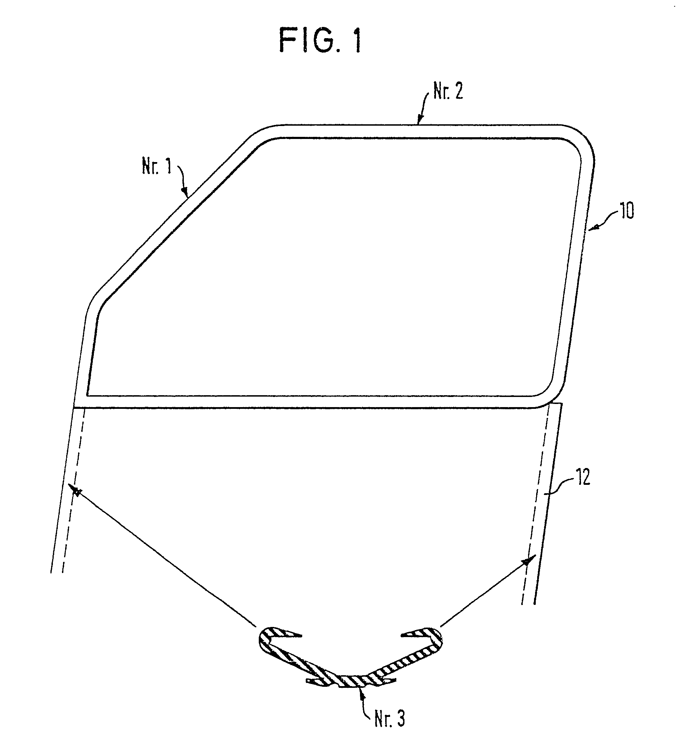

Fig. 1 zeigt eine schematische Seitenansicht eines Fensterrahmens 10 eines Kraftfahrzeugs, in dem eine nicht dargestellte Fensterscheibe geführt und gehalten ist. Zum Öffnen des Fensters wird die Fensterscheibe gemäß der Darstellung in Fig. 1 nach unten verschoben, wobei sie nicht nur durch die Seitenwände des Fensterrahmens 10, sondern auch durch entsprechende Blechkanten im Innern der Kraftfahrzeugtür geführt ist. Diese Blechkanten sind bei 12 angedeutet.

Die Führung der Fensterscheibe im Innern der Tür erfolgt durch übliche Gummiprofile, wie sie in Fig. 1 unter Nr. 3 angedeutet sind.

Die Führung und Halterung der Fensterscheibe im eigentlichen Fensterrahmen 10, und zwar im wesentlichen der Seitenflächen der Fensterscheibe, erfolgt durch ein noch näher zu erläuterndes Profil Nr. 1, das als geschlossener Rahmen ausgebildet ist, also als endloses, geschlossenes Profil Nr. 1 aus elastomerem Material der Form des Fensterrahmens 10 angepaßt und an den entsprechenden Blechkanten des Fensterrahmens 10 befestigt ist.

Zusätzlich ist ein Profil Nr. 2 aus elastomerem Material vorgesehen, das sich in dem Bereich des Fensterrahmens 10 befindet, an dem die Stirnkante der Fensterscheibe in Anlage kommt, also an allen Rändern des Fensterrahmens 10 mit Ausnahme der unteren, waagerechten Kante, an der der Fensterschacht der Fahrzeugtür beginnt. Hier ist selbstverständlich das Profil Nr. 2 nicht mehr erforderlich.

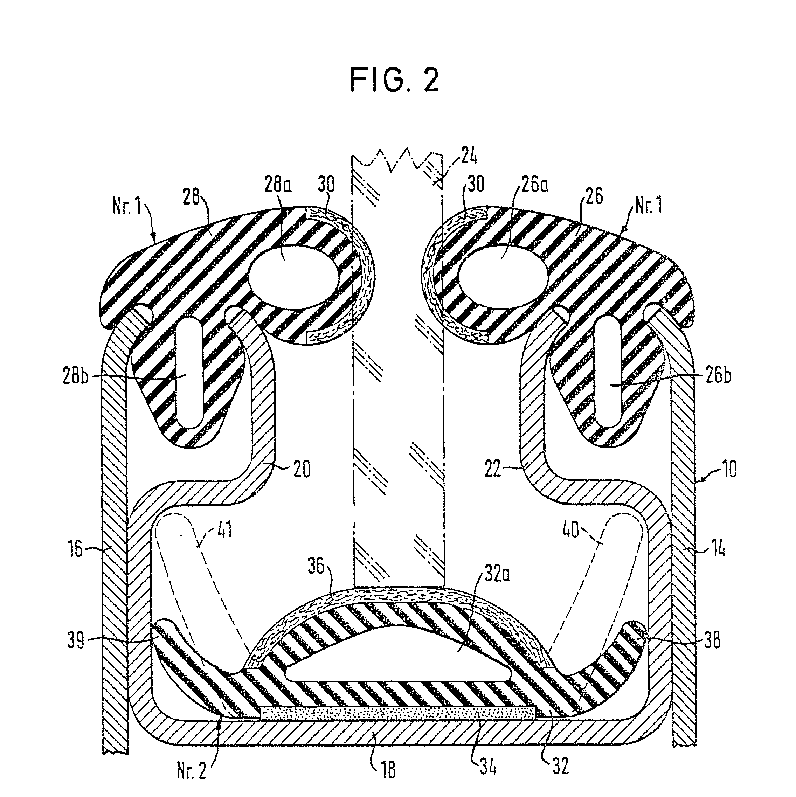

Wie man aus Fig. 2 erkennt, haben die Kanten des Fensterrahmens 10 – mit Ausnahme des Fensterschacht-Bereiches – die aus der Fig. ersichtliche Form, d. h., der Fensterrahmen 10 weist zwei etwa parallel zueinander verlaufende Blechkanten 14, 16 auf, zwischen denen ein etwa u-förmiges Blechteil 18 mit zueinander parallelen Schenkeln 20, 22 angebracht ist. Die verschiedenen Blechteile können miteinander verbunden, beispielsweise verschweißt sein.

Die gemäß der Darstellung in Fig. 2 oberen Enden der nebeneinanderliegenden Blechkanten 16, 20 bzw. 14, 22 sind aufeinander zugebogen und bilden die Mündung eines Hohlraums, in dem auf jeder Seite der Fensterscheibe 24 ein Befestigungsteil eines Teilprofils 26, 28 kraft- und formschlüssig aufgenommen ist. Die gebogenen Enden der Blechkanten 16, 20 bzw. 14, 20 ragen in Aussparungen dieses Befestigungsteils, der zusätzlich noch mit einem Hohlraum 26b, 28b versehen ist, um seinen Verformungswiderstand zu verringern.

Durch Zusammendrücken können die relativ breiten Befestigungsteile in den Spalt zwischen den Blechkanten eingeführt werden, bis die Enden der Blechkanten in den Aussparungen in Anlage kommen.

Bei der Ausführungsform nach Fig. 2 wird der Anlageteil der Teilprofile 26, 28 durch einen Hohlschlauch mit Hohlräumen 26a, 28a gebildet, dessen Anlagefläche mit einer üblichen Beflockung 30 versehen ist.

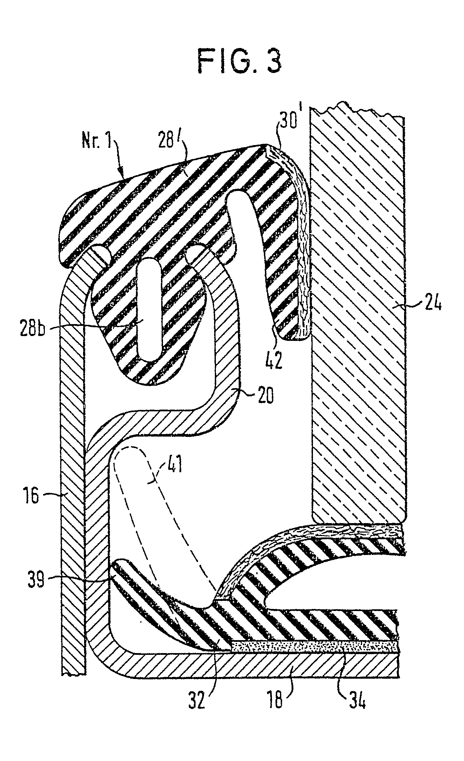

Fig. 3 zeigt eine Variante dieser Ausführungsform, bei der der Anlageteil nicht durch einen Hohlschlauch, sondern durch eien übliche Lippe 42 mit einer Beflockung 30' gebildet wird.

Diese Teilprofile 26, 28 bzw. 28' bei der Ausführungsform nach Fig. 3 werden in der üblichen Weise durch Extrudieren und Vulkanisieren aus elastomerem Material, beispielsweise Gummi, in beliebigen Längen hergestellt und dann auf die gewünschte Abmessung geschnitten; anschließend werden die Enden dieser Profilstücke, beispielsweise durch Kleben oder Vulkanisieren, miteinander verbunden, so daß ein geschlossener Profilrahmen entsteht, der auf die aus Fig. 2 bzw. 3 ersichtliche Weise an den Blechkanten 14, 16, 20, 22 des Fensterrahmens 10 befestigt wird. Diese beiden Teilprofile 26 und 28 bilden also einen geschlossenen Rahmen, der die Fensterscheibe 24 bei ihrer Bewegung in senkrechter Richtung führt und haltert.

Am Boden des Fensterrahmens, also gemäß der Darstellung in Fig. 2 an der Bodenfläche 18, ist das Bodenprofil Nr. 2 mittels eines Klebebandes 34 befestigt. Dieses Bodenprofil 32 weist nach außen ragende Dichtlippen 38, 39 auf, die an den Innenflächen der Blechkanten 20, 22 anliegen.

Das Bodenprofil 33 hat im Schnitt etwa die Form eines flachen Kissens und ist mit einem Hohlraum 32a versehen. Die der Stirnkante der Fensterscheibe 24 zugewandte Oberfläche des Bodenprofils 32 ist mit einer Beflockung 36 versehen. Alternativ kann auch eine beflockte Profillippe eingesetzt werden.

Zusätzlich zu dem Klebeband 34 oder als Alternative zu dieser Befestigungsart kann das Bodenprofil 32 durch relativ lange, seitliche Haltelippen 40, 41 fixiert werden.

Der Fensterrahmen 10 hat die aus Fig. 2 und 3 ersichtliche Querschnittsform nur in dem bereits oben definierten Bereich, in dem eine Anlage der Stirnkante der Fensterscheibe 24 am Fensterrahmen 10 erfolgt, während im Bereich des Fensterschachtes der Fensterrahmen 10 nur die seitlichen Blechkanten 14, 16, 20, 22 aufweist, also das innere Blechteil 18 nicht mehr vorhanden ist.

Auch das Bodenprofil 32 wird nur im Bereich der Anlage der Stirnkante der Fensterscheibe 24 am Fensterrahmen 10 vorgesehen, nicht jedoch im Bereich des Fensterschachtes.

## Patentansprüche

1. Vorrichtung zur Führung und Halterung einer beweglichen Fensterscheibe (24) in einem Fensterrahmen (10) eines Kraftfahrzeugs mit an dem Fensterrahmen (10) befestigbaren Profilen aus elastomerem Material, dadurch gekennzeichnet, daß

auf jeder Seite der Fensterscheibe (24) ein umlaufendes, endloses Treilprofil (26, 28, 28') auf eine Kante (14, 16, 20, 22) des Fensterrahmens (10) aufgeklemmt ist, und daß

an der Anlagefläche des Fensterrahmens (10) für die Stirnkante der Fensterscheibe (24) ein Bodenprofil (32) befestigt ist.

2. Vorrichtung nach Anspruch 1, dadurch gekennzeichnet, daß die Teilprofile (26, 28, 28') form- und/oder kraftschlüssig an den Kanten (14, 16, 20, 22) befestigt sind.

3. Vorrichtung nach einem der Ansprüche 1 oder 2, dadurch gekennzeichnet, daß die Enden der Kanten (14, 16, 20, 22) in Aussparungen der Teilprofile (26, 28, 28') aufgenommen sind.

4. Vorrichtung nach einem der Ansprüche 1 bis 3, dadurch gekennzeichnet, daß die Teilprofile (26, 28, 28') mit Hohlräumen (26a, 26b, 28a, 28b) versehen sind.

5. Vorrichtung nach einem der Ansprüche 1 bis 4, dadurch gekennzeichnet, daß der Anlageteil der beiden Teilprofile (26, 28, 28') durch einen Hohlschlauch gebildet wird.

6. Vorrichtung nach einem der Ansprüche 1 bis 4, dadurch gekennzeichnet, daß der Anlageteil der beiden Teilprofile (26, 28, 28′) durch eine Lippe (42) gebildet ist.

7. Vorrichtung nach einem der Ansprüche 1 bis 6, dadurch gekennzeichnet, daß die Anlagefläche der beiden Teilprofile (26, 28, 28′) mit einer Beflokkung (30, 30′) versehen ist.

8. Vorrichtung nach einem der Ansprüche 1 bis 7, dadurch gekennzeichnet, daß das Bodenprofil (32) mittels eines Klebebandes (34) an dem Fensterrahmen (18) befestigt ist.

9. Vorrichtung nach einem der Ansprüche 1 bis 8, dadurch gekennzeichnet, daß das Bodenprofil (32) durch Haltelippen (40, 41) an dem Fensterrahmen (20, 22) befestigt ist.

10. Vorrichtung nach einem der Ansprüche 1 bis 9, dadurch gekennzeichnet, daß das Bodenprofil (32) einen Hohlraum (32a) aufweist.

11. Vorrichtung nach einem der Ansprüche 1 bis 10, dadurch gekennzeichnet, daß die Anlagefläche des Bodenprofils (32) mit einer Beflockung (36) versehen ist.

### Claims

1. Guiding and holding device for a sash pane (24) in the window frame (10) of a motor vehicle, comprising profiles of elastomeric material which can be fixed to the window frame (10), characterised in that on each side of the sash pane (24) an encircling continuous profile portion (26, 28, 28′) is attached to an edge (14, 16, 20, 22) of the window frame (10), and that a base profile (32) is fixed to the contact surface of the window frame (10) for the end edge o the sash pane (24).

2. Device according to claim 1, characterised in that the profile portions (26, 28, 28′) ar fixed positively and/or non-positively to the edges (14, 16, 20, 22).

3. Device according to claim 1 or 2, characterised in that the ends of the edges (14, 16, 20, 22) are received in recesses in the profile portions (26, 28, 28′).

4. Device according to one of claims 1 to 3, characterised in that the profile portions (26, 28, 28′) are provided with hollow spaces (26a, 26b, 28a, 28b).

5. Device according to one of claims 1 to 4, characterised in that the contact part of the two profile portions (26, 28, 28′) is formed by a hollow tube.

6. Device according to one of claims 1 to 4, characterised in that the contact part of the two profile portions (26, 28, 28′) is formed by a lip (42).

7. Device according to one of claims 1 to 6, characterised in that the contact surface of the two profile portions (26, 28, 28′) is provided with a flock coating (30, 30′).

8. Device according to one of claims 1 to 7, characterised in that the base profile (32) is fixed to the window frame (18) by means of an adhesive strip (34).

9. Device according to one of claims 1 to 8, characterised in that the base profile (32) is fixed to the window frame (20, 22) by means of retaining lips (40, 41).

10. Device according to one of claims 1 to 9, characterised in that the base profile (32) has a hollow space (32a).

11. Device according to one of claims 1 to 10, characterised in that the contact surface of the base profile (32) is provided with a flock coating (36).

### Revendications

1. Dispositif de guidage et de maintien d'une vitre (2) mobile dans le cadre de la fenêtre (10) d'un véhicule automobile, comprenant des profilés en matière élastomère qui peuvent être fixés au cadre de la fenêtre (10), caractérisé en ce que, de chaque côté de la vitre de la fenêtre (24), un profilé partiel (26, 28, 28′), sans fin et faisant le tour, est coincé sur un bord (14, 16, 20, 22) du cadre de la fenêtre (10) et en ce que, un profilé de fond (32) est fixé à la surface d'appui du cadre de la fenêtre (10), sur laquelle porte le bord frontal de la vitre de fenêtre (24).

2. Dispositif suivant la revendication 1, caractérisé en ce que les profilés partiels (26, 28, 28′) sont fixés aux bords (14, 16, 20, 22) par complémentarité de forme et/ou par coopération de force.

3. Dispositif suivant l'une des revendications 1 ou 2, caractérisé en ce que les extrémités des bords (14, 16, 20, 22) sont reçues dans des évidements des profilés partiels (26, 28, 28′).

4. Dispositif suivant l'une des revendications 1 à 3, caractérisé en ce que les profilés partiels (26, 28, 28′) sont munis de cavités (26a, 26b, 28a, 28b).

5. Dispositif suivant l'une des revendications 1 à 4, caractérisé en ce que la partie de contact des deux profilés partiels (26, 28, 28′) est formée d'un tuyau souple.

6. Dispositif suivant l'une des revendications 1 à 4, caractérisé en ce que la partie de contact des deux profilés partiels (26, 28, 28′) est formée d'une lèvre (42).

7. Dispositif suivant l'une des revendications 1 à 6, caractérisé en ce que la surface de contact des deux profilés partiels est munie d'un flocage (30, 30′).

8. Dispositif suivant l'une des revendications 1 à 7, caractérisé en ce que le profilé de fond (32) est fixé au cadre de la fenêtre (18) au moyen d'un ruban adhésif (34).

9. Dispositif suivant l'une des revendications 1 à 8, caractérisé en ce que, le profilé de fond (32) est fixé au cadre de la fenêtre (20, 22), par des lèvres de maintien (40, 41).

10. Dispositif suivant l'une des revendications 1 à 9, caractérisé en ce que le profilé de fond (32) comporte une cavité (32a).

11. Dispositif suivant l'une des revendications 1 à 10, caractérisé en ce que la surface de contact du profilé de fond (32) est munie d'un flocage (36).

# FIG. 1

# FIG. 2

# FIG. 3